(19) Europäisches Patentamt
European Patent Office
Office européen des brevets

(11) **EP 2 100 505 A1**

(12) **EUROPEAN PATENT APPLICATION**
published in accordance with Art. 153(4) EPC

(43) Date of publication:
**16.09.2009 Bulletin 2009/38**

(21) Application number: **07832256.7**

(22) Date of filing: **21.11.2007**

(51) Int Cl.:
*A01N 25/00* (2006.01)     *A01C 1/08* (2006.01)
*A01N 43/40* (2006.01)     *A01N 43/56* (2006.01)
*A01N 47/40* (2006.01)     *A01N 51/00* (2006.01)
*A01P 3/00* (2006.01)     *A01P 7/04* (2006.01)

(86) International application number:
**PCT/JP2007/072526**

(87) International publication number:
**WO 2008/062821 (29.05.2008 Gazette 2008/22)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.11.2006 JP 2006314313**

(71) Applicant: **MITSUI CHEMICALS AGRO, INC.**
**Minato-ku,**
**Tokyo 105-7117 (JP)**

(72) Inventors:
• **SAKURAI, Seiya**
  **Mobara-shi**
  **Chiba 297-0017 (JP)**

• **KISHI, Junro**
  **Mobara-shi**
  **Chiba 297-0017 (JP)**

(74) Representative: **Wytenburg, Wilhelmus Johannes et al**
  **Mewburn Ellis LLP**
  **33 Gutter Lane**
  **London**
  **EC2V 8AS (GB)**

(54) **COMPOSITION FOR CONTROLLING PLANT DISEASE AND INSECT DAMAGE AND METHOD FOR PREVENTING PLANT DISEASE AND INSECT DAMAGE**

(57)     A composition including active ingredients of penthiopyrad and at least one neonicotinoid compound chosen from the group consisting of dinotefuran, clothianidin, nitenpyram, thiamethoxam, imidacloprid, thiacloprid, and acetamiprid, and a plant disease and insect damage prevention method of applying such a composition to a plant seed, are provided. According to the invention, a composition and a prevention method are provided which demonstrate a high degree of prevention effect and residual effectiveness against plural types of disease and insect damage, and also demonstrate a stable preventing effect to currently emerging resistant pathogens and resistant pest insects.

EP 2 100 505 A1

**Description**

Field of the Invention

The present invention relates to a plant disease and insect damage control composition, and to a plant disease and insect damage prevention method.

Background of the Invention

It is described in Japanese Patent Application Laid-Open (JP-A) No. 9-235282 that an effect is shown as a fungicidal compound for (RS)-N-[2-(1,3-dimethylbutyl)thiophene-3-yl]-1-methyl-3-trifluoromethyl-1H-pyrazole-4-carboxamide (common name: penthiopyrad), in application methods such as seed sterilization, foliar application, and the like, against: rice blast disease (Pyricularia oryzae); brown spot (Cochliobolus miyabeanus); sheath blight disease (Rhizoctonia solani); bakanae disease (Gibberella fujikuroi); powdery mildew of wheat-like cereals (Erysiphe graminis); barley stripe (Pyrenophora graminea); Typhula snow mold (Typhula sp); loose smut (Ustilago tritici); powdery mildew of grapes (Uncinula necator); powdery mildew of apples (Podosphaera leucotricha); powdery mildew of cucurbitaceae (Sphaerotheca fuliginea); and the like. However, there is no description of application methods to plant seeds, such as spray treatment, coating treatment, dip treatment, dressing treatment, for disease damage prevention.

Moreover, as chemicals which prevent plant disease by application to plant seeds conventionally, there are benomyl agents, thiophanate-methyl agents, prochloraz agents, pefurazoate agents, and the like, and it is known that they will demonstrate an effect by spray treatment, coating treatment, dip treatment, dressing treatment or the like to seeds. However, among these agents, it is reported that the control effect of benomyl agents and thiophanate-methyl agents against the rice bakanae disease pathogen is falling. While prochloraz agents have application in seed treatment against rice blast disease, brown spot, bakanae disease, tulip bulb rot disease, and shallot dry rot disease, there is no report that damage from other diseases can be prevented in this manner. Similarly, although pefurazoate agents have application in seed treatment against rice blast disease, brown spot, bakanae disease, wheat pink snow mold, and tulip bulb rot disease, there is no report that damage from other diseases can be prevented in this manner.

It is described in JP-A No. 7-179448 that an effect is shown as an insecticidal compound from dinotefuran, with application methods such as foliar application and water application, against pest insects such as: lepidopterous pests, such as common cutworm [Spodoptera litura F.], Chilo suppressalis and cabbage butterfly [Pieris rapae]; hemiptera insect pests, such as greenhouse whitefly [Trialeurodes vaporariorum], cotton aphid [Aphis gossypii], comstock mealybug [Pseudaulacaspis comstocki], and southern green stink bug [Nezara viridula L.]; Coleoptera, such as rice water weevil [Lissorhoptrus oryzophilus] and striped flea beetle [Phyllotreta striolata]; Diptera, such as the house fly [Musca domestica] and rice leaf miner [Agromyza oryzae]; Thysanoptera, such as onion thrips [Thrips tabaci]; and Orthoptera, such as smokybrown cockroach [Periplaneta fuliginosa] and rice grasshopper [Oxya yezoensis]. However, there is no indication in the description that pest insects are prevented by application procedures to plant seeds, such as spray treatment, coating treatment, dip treatment, dressing treatment, coating treatment, fumigation and smoking treatment, and pressure injection.

As chemicals which prevent pest insects to plants by application to plant seeds there are, conventionally, imidacloprid agents, thiamethoxam agents, and the like, and it is known that they will demonstrate an effect by spray treatment, coating treatment, dip treatment, or dressing treatment to seeds, and the like.

Disclosure of the Invention

Problem to be Solved by the Invention

The purpose of this invention is related to a plant disease and insect damage control composition that may prevent, when applied to plant seeds, plural diseases and insect damage occurring to plants, and that has remarkably extended residual effectiveness, and to a method of preventing diseases and insect damages with the application of such a composition to plant seeds. More specifically, the purpose of this invention is to provide a plant disease and insect damage prevention composition and a plant disease and insect damage prevention method that show an effect against plural diseases and damages from plural insects by application to plant seeds, that show an effect also against currently emerging resistant pathogens and resistant pest insects, and that furthermore have a remarkably extended residual effectiveness.

Means for Solving the Problem

As a result of carrying out diligent examination and investigation, the present inventors have determined that, by applying to plant seeds a composition including at least one neonicotinoid compound selected from the group consisting of dinotefuran, clothianidin, nitenpyram, thiamethoxam, imidacloprid, thiacloprid, and acetamiprid, to which is added penthiopyrad, a high prevention effect and residual effectiveness are shown against plural diseases and insect damages, and a stable prevention effect is shown also to the above resistant pathogens or resistant pest insects, thereby resulting in this invention.

That is, the means for solving problem are as follows.

1. A plant disease and insect damage control composition comprising active ingredients of: at least one neonicotinoid compound chosen from the group consisting of dinotefuran, clothianidin, nitenpyram, thiamethoxam, imidacloprid, thiacloprid, and acetamiprid; and
(RS)-N-[2-(1,3-dimethylbutyl)thiophene-3-yl]-1-methyl-3-trifluoromethyl-1H-pyrazo le-4-carboxamide (common name: penthiopyrad).

2. The plant disease and insect damage control composition according to 1, wherein the at least one neonicotinoid compound comprises dinotefuran.

3. A method of preventing plant disease and insect damage, the method comprising applying the composition according to 1 or 2 to plant seeds.

4. A method of preventing plant disease and insect damage, the method comprising contacting the composition according to 1 or 2 to plant seeds.

5. The prevention method according to claim 4, wherein the contact method to plant seeds is spray treatment, coating treatment, dip treatment, or dressing treatment.

6. The method according to any one of 3 to 5, wherein the plant seed is selected from the group consisting of: seeds of corn, soya bean, cotton, rice, sugar beet, wheat, barley, sunflower, tomato, cucumber, eggplant, spinach, podded peas, Japanese pumpkin, sugarcane, tobacco, sweet pepper and rape; seed potatoes of taro, potato, sweet potato and konnyaku; and bulbs of edible lily and tulip.

7. A plant seed to which the composition according to 1 or 2 has been applied.

8. An agricultural formulation comprising the composition according to 1 or 2 selected from the group consisting of a wettable powder, a flowable, a granular wettable powder, a powder formulation, and an emulsion.

Effect of the Invention

The disease and insect damage prevention method which applies the composition of the invention to plant seeds, the composition including active ingredients of penthiopyrad and at least one neonicotinoid compound chosen from the group consisting of dinotefuran, clothianidin, nitenpyram, thiamethoxam, imidacloprid, thiacloprid, and acetamiprid, demonstrates a high prevention effect and residual effectiveness to diseases and insect damages occurring in plants, shows a stable prevention effect to pathogens which have resistance to existing chemicals, and to pest insects which have resistance to existing chemicals.

Furthermore, according to the plant disease and insect damage control composition, and the plant disease and insect damage prevention method of the invention, effects may be expected of a reduction of the amount of active ingredients, a reduction in the toxicity on mammals and fishes, and a suppression of phytotoxicity.

Best Mode of the Invention

Examples are shown below of the diseases that may be prevented by applying to plant seeds the composition including active ingredients of penthiopyrad and at least one neonicotinoid compound chosen from the group consisting of dinotefuran, clothianidin, nitenpyram, thiamethoxam, imidacloprid, thiacloprid, and acetamiprid.

Specific examples of the types of disease damage which may be prevented with the method of the invention include, but are not limited to, the following:

rice diseases such as rice blast disease (Pyricularia oryzae), brown spot (Cochliobolus miyabeanus), bakanae disease (Gibberella fujikuroi);
wheat-like cereal diseases such as barley stripe (Pyrenophora graminea), loose smut (Ustilago nuda, Ustilago tritici, Ustilago nigra, Ustilago avenae), bunts (Tilletia caries, Tilletia pancicii), covered smut (Ustilago hordei, Ustilago kolleli), scald (Rhynchosporium secalis), Septoria tritici leaf blotch (Septoria tritici), glume blotch (Leptosphaeria nodorum), pink snow mold (Microdochium nivale), Fusarium head blight (Fusarium graminearum, Fusarium culmorum, Fusarium avenaceum, Microdochium nivale), kernel blight (Helminthosporium sativum), take-all (Gaeumannomyces graminis), Cephalosporium stripe (Cephalosporium gramineum) and
net blotch (Dreschlera teres);
corn diseases such as common smut (Ustilago mydis);
legume diseases such as seedling blight (Rhizoctionia solani) and Sclerotinia stem rot
(Sclerothinia sclerotorium), purple seed stain of soya beans (Cercospora kikuchii) and Rhizoctonia root rot (Rhizoctonia solani);
diseases in sugar beet such as root rot (Rhizotconia solani);
rape diseases such as black leg (Leptospheria maculans), alternaria leaf spot (Alternaria brassicae); and
damping off (Rhizoctonia solani) of various vegetables, such as tomato, cucumber, Japanese radish, watermelon, eggplant, sweet pepper, and spinach.

Examples that may be given of the insect damage which can be prevented include, but are not limited to, the following from the order of grasshoppers, crickets and locusts (Orthoptera):

BLATTIDAE such as the American cockroach (Periplaneta americana), the smokybrown cockroach (Periplaneta fuliginosa), the Japanese cockroach (Periplaneta japonica);
BLATTELLIDAE such as the German cockroach (Blattella germanica), the false German cockroach (Blattella lituricollis);
TETTIGONIIDAE such as the northern rice katydid (Homorocoryphus jezoensis), the northern rice katydid (Homorocoryphus lineosus);
GRYLLOTALPIDAE such as the mole crickets (Gryllotalpa sp.); and
ACRIDIDAE such as the short-horned grasshoppers (Oxya hyla intricata) and rice grasshopper (Oxya yezoensis);

the following from the order of Termites / White Ants (ISOPTERA): the dry-wood termite (Cryptotermes domesticus), the Formosan subterranean termite (Coptotermes formosanus), the Japanese subterranean termite (Reticulitermes speratus), the macrotermitine termite (Odontotermes formosanus);
the following from the order of thrips (THYSANOPTERA):

THRIPIDAE such as the grass thrips (Anaphothrips obscurus), the cocksfoot thrips (Chirothrips manicatus), the chanokuro-azamiuma (Dendrothrips minowai), the flower thrips (Frankliniella intonsa), the yurikiiro-azamiuma (Frankliniella lilivora), the greenhouse thrips (Heliothrips haemorrhoidalis), the composite thrips (Microcephalothrips abdominalis), the oriental soybean thrips (Mycterothrips glycines), the mulberry thrips (Pseudodendrothrips mori), the yellow tea thrips (Scirtothrips dorsalis), the redbanded (Selenothrips rubrocinctus), the oriental rice thrips (Stenchaetothrips biformis), the negikuro-azamiuma (Thrips alliorum), the loquat thrips (Thrips coloratus), the honeysuckle thrips (Thrips flavus), the Hawaiian flower thrips (Thrips hawaiiensis), the chrysanthemum thrips (Thrips nigropilosus), the melon thrips (Thrips palmi), the western flower thrips (Frankliniella occidentalis), the Japanese flower thrips (Thrips setosus), the gladiolus thrips (Thrips simplex), the onion thrips (Thrips tabaci);
PHLAEOTHRIPIDAE such as the rice aculeated thrips (Haplothrips aculeatus), the Chinese thrips (Haplothrips chinensis), the hana-kudaazamiuma (Haplothrips kurdjumovi), the red clover thrips (Haplothrips niger), the shiionaga-kudaazamiuma (Leeuwania pasanii), the camphor thrips (Liothrips floridensis), the lily thrips (Liothrips vaneeckei), the thrip (Litotetothrips pasaniae), the Japanese gall-forming thrips (Ponticulothrips diospyrosi);

the following from the order of the true bugs (HEMIPTERA): PENTATOMIDAE such as the purple stink bug (Carpocoris purpureipennis), the sloe bug (Dolycoris baccarum), the painted bug (Eurydema pulchrum), the cabbage bug (Eurydema rugosum), the Two-spotted sesame bug (Eysarcoris guttiger), the ootogeshirahoshi-kamemushi (Eysarcoris lewisi), the white spotted spined stink bug (Eysarcoris parvus), the shield bug (Eysarcoris ventralis), the polished green stink bug (Glaucias subpunctatus), the red-stripped stink bug (Graphosoma rubrolineatum), the brown malmorated stink bug (Halyomorpha mista), the rice stink bug (Lagynotomus elongatus), the oriental green stink bug (Nezara antennata), the southern green stink bug (Nezara viridula), the redbanded shield bug (Piezodorus hybneri), the brown-winged green bugs (Plautia stali), the black rice bug (Scotinophara lurida), the brown rice stink bug (Starioides degenerus);

COREIDAE such as the winter cherry bug (Acanthocoris sordidus), the Coreid-bug (Anacanthocoris striicornis), the rice stink bug (Cletus punctiger), the slender rice bug (Cletus trigonus), the Leaf-Footed Bug (Molipteryx fuliginosa);
ALYDIDAE such as the paddy bug (Leptocorisa acuta), the rice bug (Leptocorisa chinensis), the rice bug (Leptocorisa oratorius), the bean bug (Riptortus clavatus);

RHOPALIDAE such as the carrot bug (Aeschynteles maculatus), the hyaline grass bug (Liorhyssus hyalinus);

LYGAEIDAE such as the oriental chinch bug (Cavelerius saccharivorus), the bamboo chinch bug (Macropes obnubilus), the hiratahyoutan-nagakamemushi (Pachybrachius luridus), the kuroashihoso-nagakamemushi (Paromius jejunus), the seed bug (Togo hemipterus);

PYRRHOCORIDAE such as the cotton bug (Dysdercus cingulatus), the small cotton bug (Dysdercus poecilus);

TINGIDAE such as the chrysanthemum lace bug (Galeatus spinifrons), the yanagi-gunbai (Metasalis populi), the camphor lace bug (Stephanitis fasciicarina), the pear lace bug (Stephanitis nashi), the azalea lace bug (Stephanitis pyrioides), the chestnut lace bug (Uhlerites debile), the walnut lace bug (Uhlerites latiorus);

MIRIDAE such as the alfalfa plant bug (Adelphocoris lineolatus), the buchihigekuro-kasumikame (Adelphocoris triannulatus), the koao-kasumikame (Apolygus lucorum), the pale green plant bug (Apolygus spinolai), the akahoshi-kasumikame (Creontiades coloripes), the tobacco leaf bug (Nesisiocoris tenuis), the Japanese garden fleahopper (Ectometopterus micantulus), the oriental garden fleahopper (Halticiellus insularis), the apple leaf bug (Heterocordylus flavipes), the Japanese tarnished plant bug (Lygus disponsi), the madara-kasumikame (Cyphodemidea saundersi), the sugarbeet leaf bug (orthotylus flavosparsus), the wheat leaf bug (Stenodema calcaratum), the timothy grass bug (Stenotus binotatus), the sorghum plant bug (Stenotus rubrovittatus), the brokenbacked bug, the (Taylorilygus pallidulus), the rice leaf bug (Trigonotylus coelestialium);

CICADIDAE such as the large brown cicada (Graptopsaltria nigrofuscata);

APHROPHORIDAE such as the maeki-awafuki (Aphrophora costalis), the pine froghopper (Aphrophora flavipes), the common spittlebug (Aphrophora intermedia), the himefutatennaga-awafuki (Clovia punctata), the meadow spittlebug (Philaenus spumarius);

TETTIGELLIDAE such as the black-tipped leafhopper (Bothrogonia japonica), the green leafhopper (Cicadella viridis);

CICADELLIDAE such as the oak leafhopper (Aguriahana quercus), the polyphagous leafhopper (Alnetoidia alneti), the citrus leafhopper (Apheliona ferruginea), the grape Leafhopper (Arboridia apicalis), the small green leafhopper (Edwardsiana flavescens), the rose leafhopper (Edwardsiana rosae), the pine leafhopper (Empoasca abietis), the tea green leafhopper (Empoasca onukii), the orange headed leafhopper (Thaia subrufa), the smaller citrus leafhopper (Zyginella citri);

DELTOCEPHALIDAE such as aster leafhopper (Macrosteles fascifrons), the green rice leafhopper (Nephotettix cincticeps), the green rice leafhopper (Nephotettix nigropictus), the green rice leafhopper (Nephotettix virescens), the apple leafhopper (Orientus ishidai), the zig-zag rice leafhopper (Recilia dorsalis), the wheat leafhopper (Sorhoanus tritici), the alder leafhopper (Speudotettix subfusculus);

DELPHACIDAE such as the small brown planthopper (Laodelphax striatellus), the brown planthopper (Nilaparvata lugens), the pale sugarcane planthopper (Numata muiri), the maize planthopper (Peregrinus maidis), the sugarcane leafhopper (Perkinsiella saccharicida), the white-backed planthopper (Sogatella furcifera), the panicum planthopper (Sogatella panicicola);

PSYLLIDAE such as the mulberry sucker (Anomomeura mori), the lacquer psylla (Calophya nigridorsalis), the citrus psylla (Diaphorina citri), the hibiscus psylla (Mesohomotoma camphorae), the abies psylla (Psylla abieti), the Plant louse (Psylla alni), the siris psylla (Acizzia jamatonica), the apple sucker (Cacopsylla mali), the black apple sucker (Psylla malivorella), the pear sucker (Psylla pyrisuga), the tobira psylla (Psylla tobirae), the camphor sucker (Trioza camphorae), the guercus sucker (Trioza quercicola);

ALEYRODIDAE such as the orange spiny whitefly (Aleurocanthus spiniferus), the grape whitefly (Aleurolobus taonabae), the tobacco whitefly (Bemisia tabaci), the citrus whitefly (Dialeurodes citri), the greenhouse whitefly (Trialeurodes vaporariorum), the silverleaf whitefly (Bemisia argentif olii);

PHYLLOXERIDAE such as the vine phylloxera (Viteus vitifolii);

PEMPHIGIDAE such as the root aphid (Aphidounguis mali), the woolly aphid (Eriosoma lanigerum), the sugarcane root aphid (Geoica lucifuga);

APHIDIDAE such as the pea aphid (Acyrthosiphon pisum), the spirea aphid (Aphis citricola), the cowpea aphid (Aphis craccivora), the yanabi-aburamushi (Aphis farinosa yanagicola), the cotton aphid (Aphis gossypii), the foxglove aphid (Aulacorthum solani), the leafcurl plum aphid (Brachycaudus helichrysi), the cabbage aphid (Brevicoryne brassicae), the tulip bulb aphid (Dysaphis tulipae), the European birch aphid (Euceraphis punctipennis), the mealy plum aphid (Hyalopterus pruni), the turnip aphid (Lipaphis erysimi), the chrysanthemum aphid (Macrosiphoniella sanborni), the potato aphid (Macrosiphum euphorbiae), the bean aphid (Megoura crassicauda), the nashikofuki-aburamushi (Melanaphis siphonella), the apple leafcurling aphid (Myzus malisuctus), the umekobu-aburamushi (Myzus mumecola), the green peach aphid (Myzus persicae), the onion aphid, the (Neotoxoptera formosana), an apple aphid (Ovatus malicolens), the waterlily aphid (Rhopalosiphum nymphaeae), the bird-cherry aphid (Rhopalosiphum padi), the rice root aphid (Rhopalosophum rufiabdominalis), the root aphid (Sappaphis piri), the pear aphid (Schizaphis piricola), the gain aphid (Sitobion akebiae), the ibarahigenaga-aburamushi (Sitobion ibarae), the tea aphid (Toxoptera aurantii), the brown citrus aphid (Toxoptera citricidus), the peach aphid (Tuberocephalus momonis), the taiwanhigenaga-aburamushi (Uroleucon formosanum);

MARGARODIDAE such as the giant mealy bug (Drosicha corpulenta), the cottony cushion scale (Icerya purchasi);

PSEUDOCOCCIDAE such as the matsumoto mealybug (Crisicoccus matsumotoi), the Kuwana Pine Mealybug (Crisicoccus pini), the Taxus mealybug (Dysmicoccus wistariae), the citrus mealybug (Planococcus citri), the Japanese mealybug, the (Planococcus kranuhiae), the citrus mealybug (Pseudococcus citriculus), the comstock mealybug (Pseudococcus comstocki);

COCCIDAE such as the Indian wax scale (Ceroplastes ceriferus), the red wax scale (Ceroplastes rubens), the mikan-hiratakaigaramushi (Coccus discrepans), the brown soft scale (Coccus hesperidum), the citricola scale (Coccus pseudomagnoliarum), the Chinese wax scale (Ericerus pela), the European fruit lecanium scale (Lecanium corni), the Europian peach scale (Lecanium persicae), the citrus cottony scale (Pulvinaria aurantii), the soft scale (Pulvinaria citricola), the cottony mulberry scale (Pulvinaria kuwacola);

DIASPIDIDAE such as the kankitsu-kaigaramushi (Andaspis kashicola), the California red scale (Aonidiella aurantii), the yellow scale (Aonidiella citrina), the coconut scale (Aspidiotus destructor), the oleander scale (Aspidiotus hederae), the circular black scale (Chrysomphalus ficus), the San Jose scale (Comstockaspis perniciosa), the camellia mining scale (Duplaspidiotus claviger), the purple scale (Lepidosaphes beckii), the oystershell scale (Lepidosaphes ulmi), the Japanese maple scale, the (Lepidosaphes japonica), the scale (Parlatoreopsis pyri), an armored scale (Parlatoria camelliae), the tea parlatoria scale (Parlatoria theae), the black parlatoria scale (Parlatoria ziziphi), the fern scale (Pinnaspis aspidistrae), the camphor scale (Pseudaonidia duplex), the peony scale (Pseudaonidia paeoniae), the mulberry scale (Pseudaulacaspis pentagona), the white prunicola scale (Pseudaulacaspis prunicola), the arrowhead scale (Unaspis yanonensis);

the following from the order of the butterflies, moths and skippers (LEPIDOPTERA): swift moth (Endoclita excrescens), the grape treeborer (Endoclita sinensis), the moth (Palpifer sexnotata), the strawberry tortrix moth (Acleris comariana), the summer fruit tortrix moth (Adoxophyes orana fasciata), the smaller tea tortrix moth (Adoxophyes sp.), the Asiatic leafroller (Archips breviplicanus), the apple tortrix (Archips fuscocupreanus), the brown oak tortrix (Archips xylosteanus), the mat rush worm (Bactra furfurana), the tobacco leaf worm (Cnephasia cinereipalpana), the nut fruit tortrix (Cydia kurokoi), the greenish chestnut moth (Eucoenogenes aestuosa), the oriental fruit moth (Grapholita molesta), the oriental tea tortrix (Homona magnanima), the leafroller (Choristoneura adumbratana), the soybean pod borer (Leguminivora glycinivorella), the adzuki bean podworm (Matsumuraeses azukivora), the soybean pod worm (Matsumuraeses falcana), the soybean pod worm (Matsumuraeses phaseoli), the apple fruit licker (Spilonota lechriaspis), the eyespotted bud moth (Spilonota ocellana), the European grape berry moth (Eupoecillia ambiguella), the Chinese arrowed stemborer (Gynnidomorpha mesotypa), the yomogioo-hosohamaki (Phtheochroides clandestina), the mulberry bagworm (Bambalina sp.), the giant bagworm (Eumeta japonica), the tea bagworm (Eumeta minuscule), the European grain moth (Nemapogon granellus), the casemaking clothes moth (Tinea translucens), the pear leaf miner (Bucculatrix pyrivorella), the peach leafminer (Lyonetia clerkella), the apple leafininer (Lyonetia prunifoliella), the soybean leafroller (Caloptilia soyella), the tea leafroller (Caloptilia theivora), the ringo-hosoga (Caloptilia zachrysa), the persimmon leafminer (Cuphodes diospyrosella), the apple leafminer (Phyllonorycter ringoniella), the pear barkminer (Spulerina astaurota), the citrus leafminer (Phyllocnistis citrella), the grape leafminer (Phyllocnistis toparcha), the allium leafminer (Acrolepiopsis sapporensis), the yam leafminer (Acrolepiopsis suzukiella), the diamondback moth (Plutella xylostella), the apple fruit moth (Argyresthia conjugella), the vine tree borer (Paranthrene regalis), the cherry tree borer (Synanthedon hector), the persimmon fruit moth (Stathmopoda masinissa), the sweetpotato leaf folder (Brachmia triannulella), the peach fruit moth (Carposina niponensis), the pear leaf worm (Illiberis pruni), the Chinese cochlid (Parasa sinica), the oriental moth (Monema flavescens), the pear stinging caterpillar (Narosoideus flavidorsalis), the green cocklid (Parasa consocia), the persimmon cochlid (Scopelodes contracus), the rice stem borer (Chilo suppressalis), the rice leaffolder moth (Cnaphalocrocis medinalis), the yellow peach moth (Conogethes punctiferalis), the cotton caterpillar (Diaphania indica), the nashimadara-meiga (Ectomyelois pyrivorella), the Mediterranean flour moth (Ephestia kuehniella), the limabean pod borer (Etiella zinckenella), the persimmon bark borer (Euzophera batangensis), the mulberry pyralid, the (Glyphodes pyloalis), the cabbage webworm (Hellulla undalis), the rice leafroller (Marasmia exigua), the legume pod borer (Maruca testulalis), the cotton leafroller (Notarcha derogate), the Asian corn borer (Ostrinia furnacalis), the azuki bean borer (Ostrinia scapulalis), the butterbur borer (Ostrinia zaguliaevi), the bluegrass webworm (Parapediasia teterrella), the bean webworm (Pleuroptya ruralis), the yellow stem borer (Scirpophaga incertulas), the rice skipper (Parnara guttata), the red helen (Papilio helenus), the common yellow swallowtail (Papilio machaon), the swallowtail butterfly (Papilio xuthus), the eastern pale clouded yellow (Colias erate poliographus), the common cabbageworm (Pieris rapae crucivora), the long-tailed pea-blue (Lampides boeticus), the orange moth (Angerona prunaria), the Japanese giant looper (Ascotis selenaria), the phytomimetic giant geometer (Biston robustum), the plum cankerworm (Cystidia couaggaria), the pine caterpillar (Dendrolimus spectabilis), the tent caterpillar (Malacosoma neustria testacea), the apple caterpillar (Odonestis pruni japonensis), the coffee hawk moth (Cephonodes hylas), the grape horn worm (Acosmeryx castanea), the scarce chocolate-tip (Clostera anachoreta), the poplar prominent (Clostera anastomosis), the Japanese buff-tip moth (Phalera flavescens), the oak caterpillar (Phalerodonta manleyi), the lobster moth (Stauropus fagi persimilis), the tea tussock moth (Euproctis pseudoconspersa), the brown-tail moth (Sphrageidus similis), the oriental tussock moth (Artaxa subflava), the gypsy moth (Lymantria dispar), the white-spotted tussock moth (Orgyia thyellina), the Fall webworm moth (Hyphantria cunea), the mulberry tiger moth (Spilosoma imparilis), the three-spotted plusia (Acanthoplusia agnata), the eastern alchymist (Aedia leucomelas), the black cutworm (Agrotis ipsilon), the turnip moth (Agrotis segetum), the hibiscus looper (Anomis mesogona), the beet semi-looper (Autographa nigrisigna), the cabbage looper (Trichoplusia ni), the cotton bollworm (Helicoverpa armigera), the cape gooseberry budworm (Helicoverpa assulta), the flax budworm (Heliothis maritime), the cabbage Moth (Mamestra brassicae), the rice green caterpillar (Naranga aenescens), the oriental armyworm (Pseudaletia separata), the pink stem borer (Sesamia inferens), the lawn grass cutworm (Spodoptera depravata), the beet armyworm (Spodoptera exigua), the common cutworm (Spodoptera litura), the apple dagger moth (Trianea intermedia), the sorrel cutworm (Viminia rumicis), the cutworm (Xestia c-nigrum);

the following of the beetle order (COLEOPTERA): brown chafer (Adoretus tenuimaculatus), the cupreous chafer (Anomala cuprea), the soybean beetle (Anomala rufocuprea), the flower beetle (Eucetonia pilifera), the aohanamuguri (Cetonia roelofsi), the yellowish elongate chafer (Heptophylla picea), the Japanese cockchafer (Melolontha japonica), the scarab beetle (Mimela splendens), the citrus flower chafer (Oxycetonia jucunda), the Japanese beetle (Popillia japonica), the varied carpet beetle (Anthrenus verbasci), the black carpet beetle (Attagenus unicolor japonicus), the cigarette beetle (Lasioderma serricorne), the powderpost beetle (Lyctus brunneus), the corn sap beetle (Carpophilus dimidiatus), the dried fruit beetle (Carpophilus hemipterus), the leaf feeding ladybird (Epilachna vigintioctomaculata), the phytophagous ladybird beetle (Epilachna vigintioctopunctata), the black fungus beetle (Alphitobius laevigatus), the yellow-dappled longicorn (Neatus picipes), the smalleyed flour beetle (Palorus ratzeburgii), the depressed flour beetle (Palorus subdepressus), the yellow mealworm (Tenebrio molitor), the red flour beetle (Tribolium castaneum), the confused flour beetle (Tribolium confusum), the bean blister beetle (Epicauta gorhami), the kimadara-kamikiri (Aeolesthes chrysothrix), the white spotted longicorn beetle (Anoplophora malasiaca), the Japanese pine sawyer (Monochamus alternatus), the yellow-spotted longicorn beetle (Psacothea hilaris), the grape borer (Xylotrechus pyrrhoderus), the monkeypod round-headed borer (Xystrocera globosa), the azuki bean weevil (Callosobruchus chinensis), the cucurbit leaf beetle (Aulacophora femoralis), the chairosaru-hamushi (Basilepta balyi), the tortoise beetle (Cassida nebulosa), the tensaitobi-hamushi (Chaetocnema concinna), the sweetpotato leaf beetle (Colasposoma dauricum), the juushihoshikubinaga-hamushi (Crioceris quatuordecimpunctata), the rice rootworm (Donacia provosti), the ruri-hamushi (Linaeidea aenea), the soybean flea beetle (Luperomorpha tenebrosa), the two-striped leaf beetle (Medythia nigrobilineata), the rice leaf beetle (Oulema oryzae), the tropical legume leaf beetle (Pagria signata), the daikon leaf beetle (Phaedon brassicae), the striped flea beetle (Phyllotreta striolata), the umechokkiri-zoumushi (Involvulus cupreus), the peach curculio (Rhynchites heros), the sweet potato weevils (Cylas formicarius), the apple blossom weevil (Anthonomus pomorum), the daikonsaru-zoumushi (Ceutorhynchus albosuturalis), the chestnut weevil (Curculio sikkimensis), the rice plant weevil (Echinocnemus squameus), the West Indian sweetpotato weevil (Euscepes postfasciatus), the lesser cloverleaf weevil (Hypera nigrirostris), the alfalfa weevil (Hypera postica), the rice water weevil (Lissorhoptrus oryzophilus), the vegetable weevil (Listroderes costirostris), the leaf weevil (Phyllobius armatus), the chibikofuki-zoumushi (Sitonajaponicus), the rice weevil (Sitophilus oryzae), the maize weevil (Sitophilus zeamais), the hunting billbug (Sphenophrus venatus vestitus);

the following from the sawfly, wasp, bee, and ant order (HYMENOPTERA): the cabbage sawfly (Athalia japonica), the turnip sawfly (Athalia rosae ruficornis), the apple argid sawfly (Arge mali), the large rose sawfly (Arge pagana) and the oriental chestnut gall wasp (Dryocosmus kuriphilus);

the following from the fly order (DIPTERA): the rice crane fly (Tipula aino), the sciarid fly (Bradysia agrestis), the soybean pod gall midge (Asphondylia sp.), the melon fly (Dacus cucurbitae), the oriental fruit fly (Dacus dorsalis), the citrus fruit fly (Dacus tsuneonis), the Japanese cherry fruit fly (Rhacochlaenajaponica), the rice leaf miner (Hydrellia griseola), the rice whorl maggot (Hydrellia sasakii), the cherry drosophila (Drosophila suzukii), the rice stem maggot (Chlorops oryzae), the wheat stem maggot (Meromyza nigriventris), the Japanese rice leaf miner (Agromyza oryzae), the pea leaf miner (Chromatomyia horticola), the celery miner fly (Liriomyza bryoniae), the stone leek leafminer (Liriomyza chinensis), the American serpentine leafminer (Liriomyza trifolii), the vegetable leafminer (Liriomyza sativae), the pea leafminer (Liriomyza huidobrensis), the onion fly (Delia antiqua), the bean seed fly (Delia platura), the beet leaf miner (Pegomya cunicularia), the house fly (Musca domestica), the blowfly (Phormia regina), the house-gnat (Culex pipiens pallens Coquillett), the chikaieka (Culex pipiens molestus Forskal), the shina-hamadaraka (Anopheles (Anopheles) sinensis Wiedemann), and the Asian tiger mosquito (Aedes albopictus (Skuse)).
However, the invention is not limited to these examples.

In this invention, a plant seed refers to something that stores nutrients for seedlings to sprout and is used for propagation in agriculture. Specific examples that may be given include: seeds, such as of corn, soya bean, cotton, rice, sugar beet, wheat, barley, sunflower, tomato, cucumber, eggplant, spinach, podded peas, Japanese pumpkin, sugarcane, tobacco, sweet pepper, and rape; seed potatoes, such as taro, potato, sweet potato, and konnyaku; bulbs, such as edible lilies and tulips; and seed bulbs, such as shallots. Further examples that may be given are plants that do not initially exist in nature but are produced by manipulating genes and the like artificially, thereby undergoing genetic transformation, such as, but not limited to: herbicide-tolerant soya bean, corn, cotton and the like; cold adapted rice, tobacco and the like; and corn, cotton, potato and the like imparted with the functionality of producing insecticidal substances by genetic transformation.

The composition of the invention, which includes active ingredients of penthiopyrad and at least one neonicotinoid compound chosen from the group consisting of dinotefuran, clothianidin, nitenpyram, thiamethoxam, imidacloprid, thiacloprid, and acetamiprid, may be used as it is. However, the composition of the invention is usually used by mixing with a carrier and formulating by generally known methods, into a wettable powder, a flowable, a granular wettable powder, a powder formulation, an emulsion, and the like, with the addition of adjuvant(s) for formulation, such as surfactants, wetting agents, sticking agents, thickeners, preservatives, colorants, and/or stabilizers, as the need arises. The content of the penthiopyrad active ingredient in these formulations is usually in the range of from 0.005% to 99% by weight, preferably from 0.01% to 90% by weight, and still more preferably from 0.1% to 85% by weight, with respect to the total amount of the formulation. On the other hand, the total content of the at least one neonicotinoid compound chosen from the group containing dinotefuran, clothianidin, nitenpyram, thiamethoxam, imidacloprid, thiacloprid, and acetamiprid is respectively usually in the range of from 0.005% to 99% by weight, more preferably from 0.01 % to 90% by weight, and still more preferably from 0.1 % to 85% by weight, with respect to the total amount of the formulation.

Such a carrier used for the above formulation is not particularly limit, and if it is a carrier that is usually used for agricultural formulations then either a solid or a liquid carrier may be used. As a solid carrier, the following may be given as examples: inorganic substances, such as bentonite, montmorillonite, kaolinite, diatomaceous earth, white clay, talc, clay, vermiculite, gypsum, calcium carbonate, amorphous silica, ammonium sulfate; vegetable organic substances, such as soya bean flour, wood flour, saw dust, wheat flour, lactose, sucrose, and glucose; and urea and the like. As a liquid carrier, the following may be given as examples: aromatic hydrocarbons such as toluene, xylene and cumene, and naphthenes; paraffin hydrocarbons, such as n-paraffin, iso-paraffin, liquid paraffm, kerosene, mineral oil, and polybutene; ketones, such as acetone, and methyl ethyl ketone; ethers, such as dioxane and diethylene glycol dimethyl ether; alcohols, such as ethanol, propanol, and ethylene glycol; carbonates, such as ethylene carbonate, propylene carbonate, and butylene carbonate; aprotic solvents such as dimethylformamide, and dimethyl sulfoxide; and water, and the like.

Furthermore, the following adjuvants may also be used, according to the purpose and in consideration of the form of the formulation, the treatment method and the like, in order to reinforce the effect of the invention compound, and these adjuvants may be used singly or in combinations thereof. As adjuvants, surfactants may be used that are usually used in agricultural formulations for purposes such as emulsification, dispersion, spreading, and wetting, and examples that may be given of such surfactants include, but are not being limited to: nonionic surfactants such as sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene castor oils, polyoxyethylene alkyl ethers, polyoxyethylene alkyl phenyl ethers, polyoxyethylene dialkyl phenyl ethers, formaldehyde condensates of polyoxyethylene alkyl phenyl ether, polyoxyethylene-polyoxypropylene block polymers, alkyl polyoxyethylene-polyoxypropylene block polymer ethers, alkylphenyl polyoxyethylene-polyoxypropylene block polymer ethers, polyoxyethylene alkylamines, polyoxyethylene fatty acid amides, polyoxyethylene bisphenyl ethers, polyoxyalkylene benzylphenyl ethers, polyoxyalkylene styryl phenyl ethers, polyoxyalkylene adducts of a higher alcohol, polyoxyethylene ethers, ester modified silicones, and fluorosurfactants; anionic surfactants such as alkyl sulfates, polyoxyethylene diallyl ether sulfates, polyoxyethylene alkyl ether sulfates, polyoxyethylene alkylphenyl ether sulfates, polyoxyethylene benzylphenyl ether sulfates, polyoxyethylene styryl phenyl ether sulfates, polyoxyethylene-polyoxypropylene block polymer sulfates, paraffin sulfonates, alkane sulfonates, AOS, dialkyl sulfosuccinate, alkylbenzene sulfonates, naphthalene sulfonates, dialkyl naphthalene sulfonates, formaldehyde condensates of naphthalene sulfonates, alkyl diphenyl ether disulfonates, lignin sulfonates, polyoxyethylene alkyl phenyl ether sulfonates, polyoxyethylene alkyl ether sulfosuccinate half esters, fatty acid salts, N-methyl fatty acid sarcosinate, resinates, polyoxyethylene alkyl ether phosphates, polyoxyethylene phenyl ether phosphates, polyoxyethylene dialkyl phenyl ether phosphates, polyoxyethylene benzylated phenyl ether phosphates, polyoxyethylene benzylated phenylphenyl ether phosphates, polyoxyethylene styrylated phenyl ether phosphates, polyoxyethylene benzylated phenylphenyl ether phosphates, polyoxyethylene-polyoxypropylene block polymer phosphates, polyoxyethylene diallyl ether sulfates, phosphatidylcholine, phosphatidyl ethanolimine, alkyl phosphates and sodium tripolyphosphates; polyanion type high molecular surfactant derived from acrylic acid with acrylonitrile, acrylamide methylpropanesulfonic acid; cationic surfactants, such as alkyl trimethyl ammonium chloride, methyl polyoxyethylene alkyl ammonium chloride, alkyl N-methylpyridinium bromide, mono-methylated ammonium chloride, dialkyl methylated ammonium chloride, alkyl pentamethyl propylene amine dichloride, alkyl dimethyl benzalkonium chloride, and benzethonium chloride; and amphoteric surfactants, such as dialkyl diaminoethyl betaines and alkyl dimethyl benzyl betaines.

As a binder, examples that may be given include sodium arginate, polyvinyl alcohols, gum arabic, sodium CMC, bentonite, and the like.

Examples that may be given of disintegrants include sodium CMC, crosscarmellose sodium, and examples of stabilizers include hindered phenolic based antioxidants, benzotriazol-based and hindered amine-based ultraviolet absorbers, and the like.

Phosphoric acid, acetic acid, and sodium hydroxide may be used as a pH adjuster, and industrial fungicides and antifungal agents, such as 1,2-benzisothiazolin-3-one and the like, may be added for prevention of bacteria and molds.

As a thickener, xanthane gum, guar gum, sodium CMC, gum arabic, polyvinyl alcohols, montmorillonite, and the like may be used.

As required, silicone compounds may be used as antifoaming agents, and propylene glycol, ethylene glycol, and the like may be used as antifreezing agents.

When contacting to plant seeds the composition of the invention, including active ingredients of penthiopyrad and at least one neonicotinoid compound chosen from the group consisting of dinotefuran, clothianidin, nitenpyram, thiamethoxam, imidacloprid, thiacloprid, and acetamiprid, the plant seeds may be immersed in the composition as it is. Alternatively, the composition may be applied to plant seeds by immersing, dust coating, spraying, or coating, by diluting to suitable concentration after formulating the composition with a suitable carrier. There are no particular limitations to suitable carriers, and examples that may be given thereof include: liquid carriers, such as water or organic solvents such as ethanol; and include solid carriers, such as inorganic substances like bentonite, montmorillonite, kaolinite, diatomaceous earth, white clay, talc, clay, vermiculite, gypsum, calcium carbonate, amorphous silica, and ammonium sulfate; vegetable organic substances, such as soya bean flour, wood flour, saw dust, wheat flour, lactose, sucrose, and glucose; and urea. Although the dilution rate of the formulation may be set appropriately, the dilution rate applied may be 5 to 50,000 times, is preferably 10 to 20,000 times, and is still more preferably 15 to 10,000 times. The amount of the formulation when used for dust coating, spraying, and coating is usually about 0.05% to 50%, and more preferably 0.1 % to 30%, with respect to the dry weight of plant seeds. However, the amount used is not limited to these ranges, and may be varied according to the form of the formulation and to the kind of plant seed used as the candidate for treatment.

Examples

Hereafter, the invention will now be explained in detail, with reference to Examples and Test Example.

Example 1 (Powder Formulation)

5 parts of penthiopyrad, 5 parts of dinotefuran, 89.5 parts of clay, and 0.5 parts of DRILESS B (trade name, an aggregating agent made by Sankyo Co., Ltd.) were mixed together and ground uniformly, and a powder formulation containing 5% of the active ingredient of penthiopyrad and 5% of the active ingredient of dinotefuran was obtained.

Reference Example 1 (Powder Formulation)

5 parts of penthiopyrad, 94.5 parts of clay, and 0.5 parts of DRILESS B (trade name, an aggregating agent made by Sankyo Co., Ltd.) were mixed together and ground uniformly, and a powder formulation containing 5% of the active ingredient of penthiopyrad was obtained.

Reference example 2 (Powder Formulation)

5 parts of dinotefuran, 94.5 parts of clay, and 0.5 parts of DRILESS B (trade name, an aggregating agent made by Sankyo Co., Ltd.) were mixed together and ground uniformly, and a powder formulation containing 5% of the active ingredient of dinotefuran was obtained.

Example 2 (Wettable Powder)

25 parts of penthiopyrad, 25 parts of dinotefuran, 1 part of sodium ligninsulfonate, 5 parts of amorphous silica, and 44 parts of diatomaceous earth were mixed together and ground, and a wettable powder containing 25% of the active ingredient of penthiopyrad and 25% of the active ingredient of dinotefuran was obtained.

Reference example 3 (Wettable Powder)

25 parts of penthiopyrad, 1 part of sodium ligninsulfonate, 5 parts of amorphous silica, and 69 parts of diatomaceous earth were mixed together and ground, and a wettable powder containing 25% of the active ingredient of penthiopyrad was obtained.

Reference example 4 (Wettable Powder)

25 parts of dinotefuran, 1 part of sodium ligninsulfonate, 5 parts of amorphous silica, and 69 parts of diatomaceous earth were mixed together and ground, and a wettable powder containing 25% of the active ingredient of dinotefuran was obtained.

Example 3 (Flowable)

Wet grinding was carried out with a sand grinder to 20 parts of penthiopyrad, 20 parts of dinotefuran, 5 parts of propylene glycol, 5 parts of polyoxyethylene oleate, 5 parts of polyoxyethylene diallyl ether sulfate, 0.2 parts of silicone antifoaming agent and 44.8 parts of water, and a flowable containing 20% of the active ingredient of penthiopyrad and 20% of the active ingredient of dinotefuran was obtained.

Reference Example 5 (Flowable)

Wet grinding was carried out with a sand grinder to 20 parts of penthiopyrad, 5 parts of propylene glycol, 5 parts of polyoxyethylene oleate, 5 parts of polyoxyethylene diallyl ether sulfate, 0.2 parts of silicone antifoaming agent, and 64.8 parts of water, and a flowable containing 20% of the active ingredient of penthiopyrad was obtained.

Reference Example 6 (Flowable)

Wet grinding was carried out with a sand grinder to 20 parts of dinotefuran, 5 parts of propylene glycol, 5 parts of polyoxyethylene oleate, 5 parts of polyoxyethylene diallyl ether sulfate, 0.2 parts of silicone antifoaming agent, and 64.8 parts of water, and a flowable containing 20% of the active ingredient of dinotefuran was obtained.

Example 4 (Emulsion)

10 parts of penthiopyrad, 10 parts of dinotefuran, 10 parts of cyclohexane, 50 parts of xylene, and 20 parts of SORPOL (trade name, a surfactant made by Toho Chemical Industries Co., Ltd.) were dissolved and mixed uniformly, and an emulsion containing 10% of the active ingredient of penthiopyrad and 10% of the active ingredient of dinotefuran was obtained.

Reference Example 7 (Emulsion)

10 parts of penthiopyrad, 10 parts of cyclohexane, 60 parts of xylene, and 20 parts of SORPOL (trade name: a surfactant made by Toho Chemical Industries Co., Ltd.) were dissolved and mixed uniformly, and the emulsion containing 10% of the active ingredient of penthiopyrad was obtained.

Reference Example 8 (Emulsion)

10 parts of dinotefuran, 10 parts of cyclohexane, 60 parts of xylene, and 20 parts of SORPOL (trade name: a surfactant made by Toho Chemical Industries Co., Ltd.) were dissolved and mixed uniformly, and an emulsion containing 10% of the active ingredient of dinotefuran was obtained.

Example 5 (Granular Wettable Powder)

After uniformly mixing 20 parts of penthiopyrad, 20 parts of dinotefuran, 3 parts of sodium CMC, 5 parts of alkyl sulfuric acid ester, and 52 parts of clay, the mixture was kneaded with water, granulated and dried, and the particle size thereof was regulated to obtain a granular wettable powder containing 20% of the active ingredient of penthiopyrad and 20% of the active ingredient of dinotefuran.

Reference example 9 (Granular Wettable Powder)

After uniformly mixing 20 parts of penthiopyrad, 3 parts of sodium CMC, 5 parts of alkyl sulfuric acid ester, and 72 parts of clay, the mixture was kneaded with water, granulated and dried, and the particle size thereof was regulated to obtain a granular wettable powder containing 20% of the active ingredient of penthiopyrad.

Reference Example 10 (Granular Wettable Powder)

After uniformly mixing 20 parts of dinotefuran, 3 parts of sodium CMC, 5 parts of alkyl sulfuric acid ester, and 72 parts of clay, the mixture was kneaded with water, granulated and dried, and the particle size thereof was regulated to obtain a granular wettable powder containing 20% of the active ingredient of dinotefuran.

Test Example 1 Control Effect against Wheat Bunt Pathogen

Wheat seeds (variety: Norin 61) were mixed in a polyethylene bag with 0.3 % of the weight of the wheat seeds of wheat bunt spores extracted from diseased ears, and the pathogen was inoculated. Two days after inoculation, the respective powder formulations prepared in Example 1, Reference Example 1 (comparative agent), and Reference Example 2 (comparative agent) were added to the inoculated seeds and mixed thoroughly to dress the seeds with the formulations. On the day following the treatment, the seeds to which chemical treatment had been carried out were sown in each plots of 10 m² at 150 seeds, and then grown on. During the maturation period, the existence of disease onset was examined for all the ears with the naked eye, and the disease onset ear ratio was computed by the following Formula 1. Moreover, the existence or not of occurrences of phytotoxicity was also examined with the naked eye. Two replicates of the above test were performed, and the average values of the results are shown in Table 1.

Formula 1:  Disease Onset Ear Ratio =

(number of ears with disease onset / total number of ears examined) x 100

Table 1

| Test compound | Formulation treatment amount (g/kg seeds) | Disease Onset Ear Ratio (%) | Phytotoxicity |
|---|---|---|---|
| Powder formulation of the invention (Example 1) | 60 | 0.5 | None |
| | 30 | 2.0 | None |
| Comparative powder formulation (Reference Example 1) | 60 | 2.7 | None |
| | 30 | 3.3 | None |
| Comparative powder formulation (Reference Example 2) | 60 | 68.7 | None |
| | 30 | 62.3 | None |
| No treatment | - | 65.3 | |

Test Example 2 Control Effect against Rice Blast Disease in Rice

Naturally infected rice seeds (variety: Koshihikari) were dip treated for 48 hours in 20 times, 40 times, 80 times diluted solutions of the respective granular wettable powders produced in Example 5, Reference Example 9 (comparative agent), and Reference Example 10 (comparative agent), and in 300 times diluted solutions of commercially available seed fungicide (TRIFMIN, trade name, a wettable powder containing triflumizole made by Nippon Soda Co., Ltd.) as a control chemical. After soaking the seeds (at 15 °C for three days) and forced sprouting (at 30 °C for 24 hours), the seeds to which chemical treatment had been carried out were each sown at 100 seeds per pot in pots made from plastic, and then grown on in a greenhouse. The existence of disease onset was examined in all the seedlings with the naked eye at 20 days after sowing and at 40 days after sowing, and the disease onset seedling ratio was computed by the following Formula 2. Moreover, the existence or not of occurrences of phytotoxicity was also examined with the naked eye. Three replicates of the above test were performed, and the average values of the results are shown in Table 2.

Formula 2: Disease Onset Seedling Ratio =

(number of diseased seedlings / total number of seedlings examined) x 100

Table 2

| Test compound | Formulation dilution rate | Disease onset seedling ratio at 20 days (%) | Disease onset seedling ratio at 40 days (%) | Phytotoxicity |
|---|---|---|---|---|
| Granular wettable powder of the invention (Example 5) | 20 times | 0.1 | 0.3 | None |
| | 40 times | 0.4 | 0.8 | None |
| | 80 times | 1.2 | 3.5 | None |
| Comparative granular wettable powder (Reference Example 9) | 20 times | 0.3 | 2.3 | None |
| | 40 times | 0.7 | 3.7 | None |
| | 80 times | 2.1 | 6.1 | None |
| Comparative granular wettable powder (Reference Example 10) | 20 times | 15.2 | 26.5 | None |
| | 40 times | 14.9 | 28.1 | None |
| | 80 times | 16.0 | 27.3 | None |
| Control seed disinfectant TRIFMIN wettable powder | 300 times | 0.3 | 2.1 | None |
| No treatment | - | 14.7 | 27.1 | |

Test Example 3 Control Effect against Rhizoctonia Root Rot in Soya Bean

Coating treatment with the flowables produced in Example 3, Reference Example 5 (comparative agent), and Reference Example 6 (comparative agent) was carried out to soya bean seeds (variety: Tachinagaha), and spread out in a vat, and air-dried till sowing. Rhizoctonia culture was cultivated in a wheat bran medium at 25 °C for seven days, then, after grinding, the culture was mixed with steam sterilized soil to give a ratio of 0.1 % to soil weight, and plastic pots were filled therewith. The soya bean seeds to which chemical treatment had been carried out were sown at 5 seeds per pot, and grown on in a greenhouse. The number of seedling dieback was examined with the naked eye at 14 days after sowing and at 28 days after sowing, and the seedling dieback rate was computed by the following Formula 3. Moreover, the existence or not of occurrences of phytotoxicity was also examined with the naked eye. Twenty replicates of the above test were performed, and the average values of the results are shown in Table 3.

Formula 3: Seedling Dieback Rate =

((number of seeds sown - healthy seedlings) /number of seeds sown) x 100

Table 3

| Test Compound | Formulation treatment amount (g /kg of seeds) | Seedling dieback rate at 14 days (%) | Seedling dieback rate at 28 days (%) | Phytotoxicity |
|---|---|---|---|---|
| Flowable of the invention (Example 3) | 100.0 | 4.0 | 5.0 | None |
| | 50.0 | 9.0 | 11.0 | None |
| | 25.0 | 19.0 | 22.0 | None |
| Comparative flowable (Reference Example 5) | 100.0 | 6.0 | 10.0 | None |
| | 50.0 | 11.0 | 17.0 | None |
| | 25.0 | 29.0 | 38.0 | None |
| Comparative flowable (Reference Example 6) | 100.0 | 92.0 | 100.0 | None |
| | 50.0 | 88.0 | 100.0 | None |
| | 25.0 | 93.0 | 100.0 | None |
| No treatment | - | 90.0 | 100.0 | |

Test Example 4 Control Effect against Bakanae Disease in Rice

Rice seeds (variety: Tanginbozu- dwarf) contaminated with benomyl resistant Bakanae disease were mixed with the wettable powders produced in Example 2, Reference Example 3 (comparative agent), and Reference Example 4 (comparative agent), and with a commercially available seed disinfectant (BENLATE, trade name, a wettable powder containing benomyl as the active ingredient made by Sumitomo Chemical Co., Ltd.) as a control chemical, respectively, and dressing treatment was carried out. After soaking the seeds (at 15 °C for three days) and forced sprouting (at 28 °C for one day), the seeds to which chemical treatment had been carried out were sown at 100 seeds per pot in pots made from plastic, and grown on in a greenhouse. The existence of disease onset was examined for all the seedlings with the naked eye at 20 days after sowing and at 30 days after sowing, and the disease onset seedling ratio was computed by the following Formula 4. Moreover, the existence or not of occurrences of phytotoxicity was also examined with the naked eye. Three replicates of the above test were performed, and the average values of the results are shown in Table 4.

Formula 4

Disease onset seedling ratio =

(number of seedlings with disease onset / number of seeds sown) x 100

Table 4

| Test compound | Formulation treatment amount (g/kg seed) | Disease onset seedling ratio at 20 days (%) | Disease onset seedling ratio at 30 days (%) | Phytotoxicity |
|---|---|---|---|---|
| Wettable powder of the invention (Example 2) | 20.0 | 1.6 | 2.1 | None |
| | 10.0 | 4.2 | 5.3 | None |
| | 5.0 | 8.4 | 10.4 | None |
| Comparative wettable powder (Reference Example 3) | 20.0 | 3.3 | 6.5 | None |
| | 10.0 | 8.0 | 15.2 | None |
| | 5.0 | 14.7 | 25.9 | None |

(continued)

| Test compound | Formulation treatment amount (g/kg seed) | Disease onset seedling ratio at 20 days (%) | Disease onset seedling ratio at 30 days (%) | Phytotoxicity |
|---|---|---|---|---|
| Comparative wettable powder (Reference Example 4) | 20.0 | 46.2 | 59.1 | None |
| | 10.0 | 46.8 | 58.8 | None |
| | 5.0 | 45.9 | 59.9 | None |
| Control seed disinfectant BENLATE wettable powder | 5.0 | 39.7 | 51.7 | None |
| No treatment | - | 45.3 | 62.3 | |

Test Example 5 Control Effect against Beet Flea Beetle on Sugar Beet

Treatment was carried out to sugar beet seeds in a seed dressing machine (chemical liquid jetting within a rotating drum) using the following doses of the wettable powders produced in Example 2, Reference Example 3 (comparative agent), and Reference Example 4 (comparative agent), and Gaucho (trade name, an insecticide containing imidacloprid made by Bayer CropScience) as a control insecticide, respectively.
Wettable powder: 65 g and 130 g of formulation / unit (one unit is 100,000 grains of sugar beet seeds).
Gaucho (imidacloprid): 130 g formulation / unit.
On the next day of treatment, the test seeds were sown at 50 seeds each, in a concrete pot filled with soil (5 m length x 2 m width x 60 cm depth).
The level of insect damage by striped flea beetle was investigated at 45 days after sowing and at 60 days after sowing, and the prevention index was computed by the following formula 5. Moreover, the existence or not of occurrences of phytotoxicity
was also examined with the naked eye.
Results are shown in Table 5.
The index number levels of insect damage are as follows.
Index 0: No insect damage
Index 1: Slight level of insect damage
Index 2: Medium level of insect damage
Index 3: High level of insect damage

Formula 5:

Prevention index = 100 - ((1 x number of insect damage at index 1 + 2 x number of insect damage at index 2 + 3 x number of insect damage at index 3) / (3 x total number of examinations) x 100)

Table 5

| Test compound | Formulation treatment amount (g/unit) | Prevention index at 45 days after sowing (%) | Prevention index at 60 days after sowing (%) | Phytotoxicity |
|---|---|---|---|---|
| Wettable powder of the invention (Example 2) | 65 | 98 | 30 | None |
| | 130 | 100 | 43 | None |
| Comparative wettable powder (Reference Example 3) | 65 | 0 | 0 | None |
| | 130 | 0 | 0 | None |

(continued)

| Test compound | Formulation treatment amount (g/unit) | Prevention index at 45 days after sowing (%) | Prevention index at 60 days after sowing (%) | Phytotoxicity |
|---|---|---|---|---|
| Comparative wettable powder (Reference Example 4) | 65 | 95 | 13 | None |
| | 130 | 98 | 23 | None |
| Control insecticide Gaucho | 130 | 90 | 30 | None |
| No treatment | - | 0 | 0 | |

Test Example 6 Control Effect against Tobacco Whitefly on Tomato

Tomato seeds were immersed in a 10% polyvinyl alcohol solution, and coating treatment was carried out onto the seeds with a seed dressing machine using the following doses of the wettable powders produced in Example 2, Reference Example 3 (comparative agent), and Reference Example 4 (comparative agent), and Gaucho (trade name, an insecticide containing imidacloprid made by Bayer CropScience) as a control insecticide, respectively.
Wettable powder of Example 2, Reference Example 3 or Reference Example 4: 50g of formulation / 100g of seeds
Gaucho (imidacloprid): 50g of formulation / 100g of seeds
On the next day of treatment, the test seeds were sown at 50 seeds each, in a concrete pot filled with soil (5 m length x 2 m width x 60 cm depth).
The number of parasite larvae of the tobacco whitefly were examined at 21 days after treatment and at 35 days after treatment, and the prevention index was computed by the following Formula 6. Moreover, the existence or not of occurrences of phytotoxicity was also examined with the naked eye.
Results are shown in Table 6.

Formula 6:

$$\text{Prevention index} = 100 - ((\text{number of parasite larvae of treated sections}/ \text{number of parasite larvae of non-treated section}) \times 100)$$

Table 6

| Test compound | Formulation treatment amount (g/ 100 g seed) | Prevention index at 21 days after treatment (%) | Prevention index at 35 days after treatment (%) | Phytotoxicity |
|---|---|---|---|---|
| Wettable powder of the invention (Example 2) | 50 | 99 | 85 | None |
| Comparative wettable powder (Reference Example 3) | 50 | 0 | 0 | None |
| Comparative wettable powder (Reference Example 4) | 50 | 98 | 68 | None |
| Control insecticide Gaucho | 50 | 20 | 0 | None |
| No treatment | - | 0 | 0 | |

Test Example 7 Control Effect against Azuki Bean Weevil on Azuki Bean

Coating treatment was carried out at a dose of 5, 10 and 20 ml to 1 kg of azuki bean seeds using the respective flowables produced in Example 3, Reference Example 5 (comparative agent), and Reference Example 6 (comparative agent). After air drying, portions thereof were moved to 9cm deep petri dishes, and allowed to stand in a constant 25 °C temperature room. Two months and three months, respectively, after treatment, five adult male adzuki bean weevils and five adult female azuki bean weevils, ten in total, were grazed per deep petri dish. The number of dead weevils and the number of eggs laid on the azuki beans were examined two days after grazing, and the mortality was computed by the following Formula 7. Five replicates of the above test were performed, and the average values of the results are shown in Table 7.

Formula 7

Mortality = (number of dead weevils in treated section / 50 weevils) x 100

Table 7

| Test compound | Active ingredient treatment amount (g/ kg seed) | Two months after treatment | | Three months after treatment | |
|---|---|---|---|---|---|
| | | Mortality % | Number of eggs laid /female | Mortality % | Number of eggs laid / female |
| Flowable of the invention (Example 3) | 1.0 | 100 | 0.00 | 100 | 0.00 |
| | 2.0 | 100 | 0.00 | 100 | 0.00 |
| | 4.0 | 100 | 0.00 | 100 | 0.00 |
| Comparative flowable (Reference Example 5) | 1.0 | 0 | 12.0 | 0 | 10.0 |
| | 2.0 | 0 | 11.5 | 0 | 11.5 |
| | 4.0 | 0 | 11.0 | 0 | 10.3 |
| Comparative flowable (Reference Example 6) | 1.0 | 95 | 0.06 | 93 | 0.10 |
| | 2.0 | 100 | 0.00 | 100 | 0.02 |
| | 4.0 | 100 | 0.00 | 100 | 0.00 |
| No treatment | - | 0 | 11.5 | 0 | 10.8 |

**Claims**

1. A plant disease and insect damage control composition comprising active ingredients of: at least one neonicotinoid compound chosen from the group consisting of dinotefuran, clothianidin, nitenpyram, thiamethoxam, imidacloprid, thiacloprid, and acetamiprid; and
(RS)-N-[2-(1,3-dimethylbutyl)thiophene-3-yl]-1-methyl-3-trifluoromethyl-1H-pyrazo le-4-carboxamide (common name: penthiopyrad).

2. The plant disease and insect damage control composition according to claim 1, wherein the at least one neonicotinoid compound comprises dinotefuran.

3. A method of preventing plant disease and insect damage, the method comprising applying the composition according to claim 1 or 2 to plant seeds.

4. A method of preventing plant disease and insect damage, the method comprising contacting the composition according to claim 1 or 2 to plant seeds.

5. The prevention method according to claim 4, wherein the contact method to plant seeds is spray treatment, coating treatment, dip treatment, or dressing treatment.

6. The method according to any one of claims 3 to 5, wherein the plant seed is selected from the group consisting of: seeds of corn, soya bean, cotton, rice, sugar beet, wheat, barley, sunflower, tomato, cucumber, eggplant, spinach, podded peas, Japanese pumpkin, sugarcane, tobacco, sweet pepper and rape; seed potatoes of taro, potato, sweet potato and konnyaku; and bulbs of edible lily and tulip.

7. A plant seed to which the composition according to claim 1 or 2 has been applied.

8. An agricultural formulation comprising the composition according to claim 1 or 2 selected from the group consisting of a wettable powder, a flowable, a granular wettable powder, a powder formulation, and an emulsion.

**INTERNATIONAL SEARCH REPORT**

| International application No. |
| --- |
| PCT/JP2007/072526 |

A. CLASSIFICATION OF SUBJECT MATTER
*A01N25/00*(2006.01)i, *A01C1/08*(2006.01)i, *A01N43/40*(2006.01)i, *A01N43/56*
(2006.01)i, *A01N47/40*(2006.01)i, *A01N51/00*(2006.01)i, *A01P3/00*(2006.01)i,
*A01P7/04*(2006.01)i

According to International Patent Classification (IPC) or to both national classification and IPC

B. FIELDS SEARCHED

Minimum documentation searched (classification system followed by classification symbols)
A01N25/00, A01C1/08, A01N43/40, A01N43/56, A01N47/40, A01N51/00, A01P3/00,
A01P7/04

Documentation searched other than minimum documentation to the extent that such documents are included in the fields searched
Jitsuyo Shinan Koho          1922-1996     Jitsuyo Shinan Toroku Koho     1996-2008
Kokai Jitsuyo Shinan Koho     1971-2008     Toroku Jitsuyo Shinan Koho     1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2006-213664 A  (Mitsui Chemicals, Inc.),<br>17 August, 2006 (17.08.06),<br>Claim 1; Par. No. [0030]; test examples 1, 5<br>(Family: none) | 1-8 |

☐ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 January, 2008 (07.01.08) | Date of mailing of the international search report<br>22 January, 2008 (22.01.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9235282 A
- JP 7179448 A